# FASCICULE DE BREVET EUROPEEN

(11) **EP 2 471 075 B1**
(45) Date de publication et mention de la délivrance du brevet: **01.04.2015**
(21) Numéro de dépôt: 10763751.4
(22) Date de dépôt: 25.08.2010
(51) Int. Cl.: G21F 7/005, F16J 13/08, F16J 13/18

(54) **DISPOSITIF DE JONCTION TEMPORAIRE ÉTANCHE À DOUBLE PORTE**
PROVISORISCH ABGEDICHTETE DOPPELTÜRVERBINDUNGSVORRICHTUNG
TEMPORARY SEALED DOUBLE-DOOR JUNCTION DEVICE

(30) Priorité: 26.08.2009 FR 0955825
(43) Date de publication de la demande: 04.07.2012
(73) Titulaire: LOURD'INNOV, 65100 Lourdes (FR)
(72) Inventeur: Saint Martin, Bernard, 92100 Boulogne (FR); Imbert, Claude, 38700 La Tronche (FR)
(74) Mandataire: Regimbeau
(86) Numéro de dépôt international: PCT/FR2010/051775
(87) Numéro de publication internationale: WO 2011/023906

(56) Documents cités:
- EP-A1- 2 091 051
- FR-A1- 2 573 909
- FR-A1- 2 613 526
- GB-A- 2 218 663

## Description

### Domaine de l'invention

L'invention concerne un dispositif de jonction temporaire étanche à double porte pour la mise en communication temporaire d'une enceinte à environnement contrôlé avec un conteneur amovible renfermant, lui aussi, un environnement contrôlé en vue d'un transfert de produits de l'un de ces éléments vers l'autre, sous protection croisée (c'est-à-dire que les produits, contaminants, toxiques ou au contraire stériles, doivent être protégés de toute contamination extérieure tandis que l'extérieur doit lui aussi être protégé de toute contamination par les produits). Ces produits peuvent être des consommables, des agents actifs, des éléments d'outillage ou autres.

En pratique, l'enceinte ou le conteneur à environnement (ou atmosphère) contrôlé est isolé vis-à-vis de l'extérieur, de manière habituellement étanche.

### Description de l'art antérieur

On connaît déjà, d'après le document EP - 0 688 020 (ou US - 5 853 207), un dispositif de jonction étanche entre deux enceintes isolées d'un milieu extérieur, ainsi qu'une enceinte à usage unique adaptée à être mise en oeuvre dans un tel dispositif.

Un tel dispositif de jonction étanche comporte, de manière générale, une bride solidaire de l'enceinte et fermée par une porte mobile, ainsi qu'une bride solidaire du conteneur mobile et fermée elle aussi par une porte mobile. Ces portes sont normalement fermées de manière étanche mais, lorsque les deux brides d'une part et les deux portes d'autre part sont accolées l'une à l'autre, un mouvement d'ensemble du bloc de deux portes ainsi constitué est possible pour mettre en communication l'intérieur du conteneur amovible avec l'intérieur de l'enceinte, pour permettre l'introduction ou l'extraction de produits.

Puisque le mouvement du bloc de portes a lieu, en pratique, vers l'intérieur de l'enceinte, c'est à dire que la porte du conteneur traverse la bride de l'enceinte, on appelle classiquement « ensemble femelle » l'ensemble de la bride femelle et de la porte femelle lié à l'enceinte, et « ensemble mâle » l'ensemble de la bride mâle et de la porte mâle lié au conteneur et pouvant se connecter sur le dit ensemble femelle.

Le mouvement du bloc formé des deux portes est contrôlé et guidé d'une manière quelconque, capable de permettre le dégagement de ce bloc à l'écart de l'espace de communication défini par les brides, puis son retour lorsque l'on veut refermer les deux portes.

Il est important de noter que les surfaces extérieures des brides et des portes sont exposées à l'environnement extérieur tant que le conteneur n'est pas connecté à l'enceinte, mais que ces surfaces extérieures, qui se font face lors de la fixation d'une bride à l'autre, doivent être appliquées de manière étanche l'une contre l'autre de manière à isoler ces surfaces vis-à-vis de l'espace intérieur de l'enceinte et du conteneur.

On comprend que, tant qu'aucun conteneur n'est fixé contre l'enceinte, la porte obturant l'accès à cette enceinte, ainsi que la porte obturant l'accès à l'intérieur du conteneur doivent rester fermées de manière étanche. Dans ce but, un joint situé entre la porte et la bride de chaque ensemble mâle et femelle permet, par sa surface interne, d'obtenir cette étanchéité jusqu'au droit de la ligne extrême de la porte (c'est-à-dire de la ligne de joint entre les portes et les brides, à la fois). Lorsque la mise en communication est réalisée (ce qui implique les brides sont accolées face contre face), les surfaces planes externes des joints assurent l'étanchéité bride sur bride, d'une part, et porte sur porte, d'autre part, jusqu'au droit des lignes extrêmes des portes et des brides. On comprend qu'une surface, assimilable à une ligne, située à l'intersection de ces portées de joints, restera toujours indéfinie et constitue ce qu'on appelle communément une « ligne critique ». Lorsqu'une mise en communication des conteneurs est souhaitée, les brides doivent être accolées et verrouillées, tandis que les portes, initialement verrouillées sur les brides, doivent être libérées, puis passer au travers de la bride femelle. Or les lois de la tolérance mécanique imposent que les dimensions de la porte mâle doivent être très légèrement inférieures (éventuellement très proches), aux dimensions de la bride femelle, augmentant ainsi « l'épaisseur » de la ligne critique. Cela implique actuellement des mécanismes complexes garantissant, entre autres, que les portes ne peuvent être ouvertes que si, et seulement si, les brides sont accolées et verrouillées l'une contre l'autre. Bien d'autres conditions restrictives sont nécessaires au bon fonctionnement du système. Or plus les portes comportent de mécanismes compliqués, plus ces systèmes sont fragiles, et plus ils présentent de risques de dysfonctionnements ou d'insécurités. Et, plus ils comportent de systèmes élaborés, plus ils sont coûteux et chers ; cela peut constituer un frein à la mise en place de telles enceintes et de tels conteneurs ; en particulier, le coût des portes de conteneurs amovibles destinés à une telle mise en communication étanche avec une enceinte peut dissuader l'homme de métier d'adopter le principe d'un usage unique pour de tels conteneurs pour éliminer tout risque de contamination du contenu du conteneur par un produit transporté lors d'un usage antérieur.

L'invention a pour objet de pallier certains au moins des inconvénients précités et propose à cet effet un dispositif de jonction temporaire étanche à double porte, pour la mise en communication temporaire d'une enceinte à environnement contrôlé avec un conteneur amovible à paroi souple à environnement contrôlé, comportant, d'une part, une bride femelle normalement obturée par une porte femelle en formant un ensemble adapté à obturer une ouverture d'une telle enceinte et, d'autre part, une bride mâle normalement obturée par une porte mâle en formant un ensemble adapté à obturer une ouverture d'un tel conteneur amovible à paroi souple, cette bride mâle étant adaptée à être accouplée de manière étanche à la bride femelle, et cette porte mâle étant adaptée à être accouplée de manière étanche à la porte femelle et à traverser la bride femelle, caractérisé en ce que :
* la porte mâle destinée à être fixée à un conteneur amovible à paroi souple est traversée en une portion centrale par un arbre libre en rotation sur lequel sont montées, solidaires l'une de l'autre, du côté de la face destinée à être accolée à la porte femelle, une hélice à au moins deux pales et, du côté de la face opposée, une manivelle à au moins deux bras conçue en sorte de pouvoir être entraînée en rotation par action au travers d'une paroi souple d'un tel conteneur amovible à paroi souple,
* la porte femelle comporte, sous sa face destinée à être accolée à la porte mâle, des encoches ménagées dans l'épaisseur de cette porte femelle, adaptées à recevoir des pales de l'hélice, lors d'une rotation de celle-ci solidarisant ainsi les deux portes entre elles,
* la section intérieure de la bride mâle et la section extérieure de la porte mâle ont des contours complémentaires qui présentent, par rapport à l'arbre monté rotatif dans la portion centrale, des variations de distance telles que la manivelle a au moins une configuration angulaire de fermeture dans laquelle les extrémités de certains au moins de ses bras débordent de la porte mâle et viennent en appui sur la bride mâle en sorte de solidariser cette porte mâle avec cette bride mâle, et une configuration angulaire d'ouverture dans laquelle ces extrémités sont à l'écart de la bride mâle et permettent un mouvement de la porte mâle au travers de la bride femelle.

On appréciera que, ainsi, le principe du transfert par système de double porte étant admis, l'invention a pour objet de simplifier la conception des parties complémentaires bride+porte d'un dispositif de jonction étanche du type précité, d'en améliorer le niveau d'assurance de la qualité, tout particulièrement au niveau de la propreté des conteneurs, des sécurités fonctionnelles. Pour ce faire, elle diminue tout au long du process de fabrication le nombre d'interventions humaines, risques majeurs de contamination. En particulier, la forme non circulaire du contour externe de la porte mâle (et du contour interne de la bride mâle) permet d'assurer de manière très simple un verrouillage étanche de la porte mâle dans la bride mâle, par simple appui des extrémités des bras de la manivelle, dont la longueur est choisie en fonction de ce contour ; en outre, le fait que la manivelle soit portée par la porte mâle destinée à être solidaire d'un conteneur amovible à paroi souple, ce qui va à rencontre d'un certain nombre de préjugés de l'homme de métier, permet que la manoeuvre de cette manivelle puisse se faire en profitant de la flexibilité de cette paroi souple sans avoir à prévoir d'éléments latéraux de commande, ou d'éléments de commande exigeant un accès à l'intérieure de l'enceinte. Pourtant l'ensemble de l'arbre, de l'hélice et de la manivelle liés de manière solidaire est un ensemble qui peut être obtenu à faible coût ; l'invention, tout en en réduisant le coût, contribue donc à favoriser la mise en oeuvre de conteneurs amovibles à usage unique dans des conditions de sécurités fonctionnelles optimisées lors de la connexion. A titre subsidiaire, l'invention permet de réduire le risque de contamination lors de l'introduction ou de l'extraction de produits vers, ou depuis, l'enceinte.

On comprend que la manivelle est conçue en sorte de pouvoir être entraînée en rotation par action au travers de la paroi souple du conteneur amovible, de manière à permettre que la rotation de cette manivelle soit commandée depuis l'extérieur de l'enceinte et de ce conteneur amovible.

Un dispositif ainsi défini peut sembler présenter des similitudes avec l'objet du document FR - 2 613 526 (Euritech) qui divulgue aussi une porte munie d'un ensemble tournant formé d'un arbre dont sont solidaires, d'un côté un volant (assimilable à la manivelle de la présente invention) et, de l'autre côté, un ensemble de griffes, mais cet ensemble est porté par la porte femelle de l'enceinte ; ainsi le volant est du côté de la porte qui fait face à l'intérieur de l'enceinte et n'a pas à traverser la bride femelle ; toutefois, il ne peut donc être manoeuvré que par l'intérieur de cette enceinte, et met en oeuvre des moyens complexes de verrouillage de la porte femelle dans la bride femelle. Le dispositif de l'invention s'en distingue notamment par le fait que l'ensemble tournant est monté sur la porte mâle, adaptée à être solidaire d'un conteneur amovible à paroi souple (alors que ce document ne semble envisager que des conteneurs à paroi rigide), ce qui permet, en s'écartant de la forme habituellement circulaire des portes et brides, de donner à cet ensemble tournant et à cette porte mâle et à cette bride mâle une structure simple de structure et de mise en oeuvre, donc peu coûteuse, sans impliquer un accès par l'intérieur de l'enceinte, tout en permettant de manière simple la réalisation des diverses fonctions de sécurité.

Selon des caractéristiques avantageuses de l'invention, éventuellement combinées :
- les contours complémentaires de la porte mâle et de la bride mâle ont une forme sensiblement polygonale, avantageusement rectangulaire (aux coins éventuellement arrondis), ou même sensiblement carrée,
- la bride mâle comporte, sous sa face opposée à celle devant affronter la bride femelle, des évidements destinés à recevoir les extrémités des bras de la manivelle dans ladite configuration angulaire de fermeture. Ces évidements se terminent par des butées adaptées à délimiter le débattement angulaire des bras en configuration de fermeture de la manivelle. Ces butées peuvent être situées sur la porte mâle, sur sa face opposée à celle devant affronter la porte femelle,
- la porte mâle comporte, sur sa face destinée à être affrontée à la porte femelle, une butée escamotable adaptée à empêcher la rotation de l'hélice ou de l'arbre à partir d'une configuration dans laquelle la manivelle est dans sa configuration angulaire de verrouillage dans un sens permettant un déverrouillage de cette manivelle, cette butée étant adaptée à être escamotée par la venue de la porte femelle en affrontement avec la porte mâle ; tant que cette butée n'est pas escamotée, la manivelle reste bloquée en rotation et la porte mâle ne peut pas être désolidarisée de la bride mâle, c'est-à-dire que le conteneur amovible à paroi souple est inviolable,
- l'hélice et la manivelle sont montées sur l'arbre central de telle manière que la manivelle soit dans sa configuration angulaire de fermeture lorsque les pales de l'hélice sont en regard des ouvertures d'entrée dans les encoches de la porte femelle tandis que l'hélice est suffisamment engagée dans les encoches en sorte d'atteler axialement les portes mâle et femelle lorsque la manivelle est dans sa configuration angulaire d'ouverture.

Selon d'autres caractéristiques avantageuses, éventuellement combinées, entre elles ou avec les précédentes :
- les encoches dans la porte femelle comportent, en leur fond, des butées délimitant pour l'hélice une configuration angulaire d'attelage,
- la porte femelle comporte au moins un élément de verrouillage de cette porte femelle à la bride femelle, dont le dégagement vis-à-vis de cette bride femelle est commandé par la rotation de l'hélice dans les encoches de cette porte femelle,
- un élément de couplage est prévu pour déplacer l'élément de verrouillage en fonction de la rotation de l'hélice dans les encoches, l'élément de verrouillage étant en une configuration de verrouillage de la porte femelle avec la bride femelle tant que les pales de l'hélice sont en dehors des encoches, et étant en une configuration de libération lorsque les pales sont en fin de course dans les encoches,
- la porte femelle comporte un verrou adapté à bloquer l'élément de verrouillage en configuration de verrouillage et à ne permettre à celui-ci de venir en configuration de dégagement sous l'action de l'hélice que lorsqu'une porte mâle est affrontée à cette porte femelle,
- la tige de verrouillage comporte une portion de section réduite coopérant avec une tête du verrou qui pénètre dans le canal à l'emplacement de la section réduite de manière à pouvoir le bloquer en position ou au contraire lui permettre de coulisser dans ledit canal.

De manière également avantageuse, la porte femelle est traversée par une clé adaptée à être solidarisée temporairement à l'arbre de la porte mâle en sorte de pouvoir commander, lorsque cela est opportun, des mouvements de rotation de cet arbre à partir depuis l'espace situé en regard de la porte femelle à l'opposé de la porte mâle ; ces mouvements de rotation peuvent être manuels ou motorisés.

De manière également avantageuse, la porte mâle comporte un creux dans lequel est située l'hélice, un film de protection détachable étant fixé sur une portion périphérique de l'ensemble formé de la bride mâle et de la porte mâle. On comprend qu'un tel film de protection détachable assure la protection contre toute contamination de la face avant de l'ensemble porte+bride mâle porté par le conteneur amovible à paroi souple et l'évidence d'intégrité de cet ensemble (ensemble neuf, non endommagé et n'ayant pas été utilisé), jusqu'au moment où on l'enlève, juste avant la connexion du conteneur à l'enceinte au moyen du dispositif de jonction défini ci-dessus ; cela est particulièrement intéressant en cas de conteneur amovible à usage unique (en s'interdisant tout nouvel usage du conteneur amovible n'ayant plus un tel film de protection).

Selon une autre caractéristique avantageuse de l'invention, intéressante en soi, la bride mâle comporte, le long de son bord interne situé à l'opposé de la bride femelle, une jupe s'étendant jusqu'au travers de la bride femelle ; de la sorte cette jupe vient recouvrir et protéger la ligne critique ; en d'autres termes, elle interdit tout contact des mains ou objets transférés du conteneur vers l'enceinte, ou inversement, avec des joints éventuellement contaminés.

De manière avantageuse, les brides comportent des éléments complémentaires de positionnement et d'attelage temporaire.

L'invention porte également sur un ensemble comportant une enceinte dont une ouverture est obturée par une bride femelle et une porte femelle et au moins un conteneur amovible à paroi souple comportant une ouverture obturée par une bride mâle et une porte mâle, ces brides et ces portes formant un dispositif de jonction étanche défini ci-dessus.

L'invention porte également sur un conteneur amovible à paroi souple comportant une bride mâle et une porte mâle destinés à faire partie d'un dispositif de jonction étanche du type précité.

### Liste des figures

Des objets, caractéristiques et avantages de l'invention ressortent de la description qui suit, donné à titre illustratif et non limitatif, en regard des dessins annexés sur lesquels :
La figure 1 est une vue en coupe d'un couple bride/porte adapté à obturer de manière étanche une ouverture d'un conteneur amovible, à atmosphère contrôlée, par exemple à usage unique. Un détail en représente un joint assurant l'étanchéité entre la bride et la porte de cet ensemble. La figure 2 est une vue en coupe d'un autre couple bride/porte adapté à obturer de manière étanche une ouverture d'une enceinte à atmosphère contrôlée, par exemple stérile. Un détail en représente un joint assurant l'étanchéité entre la bride et la porte de cet ensemble.
La figure 3 est une vue en coupe de l'ensemble de ces couples des figures 1 et 2 après assemblage, l'ensemble des portes étant représenté en traits pleins lorsqu'il est en configuration de fermeture et en traits mixte lorsqu'il est en configuration d'ouverture.
La figure 4 est une vue de face de l'ensemble bride/porte de la figure 2, vu de la gauche, lorsqu'il est intégré à l'assemblage de la figure 3 (avec une partie seulement de l'hélice que comporte l'ensemble de la figure 1). Un détail en représente la coopération entre une pale de l'hélice et un élément de verrouillage de la bride et de la porte de cet ensemble de la figure 2.
La figure 5 est une vue de face de l'ensemble bride/ porte de la figure 1, vue depuis la gauche. La figure 6 est une variante de la figure 5.
La figure 7 est une vue de détail d'une variante de la figure 4 montrant une butée amovible empêchant une rotation de l'hélice.
La figure 8 est une vue en coupe du détail de la figure 7.
La figure 9 est une vue partielle en coupe des brides de la figure 3 munies de crochets et verrous d'arrimage de ces brides entre elles.
La figure 10 est une vue schématique en élévation d'un dispositif de sécurité coopérant avec une tige de verrouillage de l'ensemble de la figure 2.
La figure 11 en est une vue en perspective éclatée.
La figure 12 est une vue en coupe d'un assemblage de brides mâle et femelles muni d'une protection de ligne critique, sans les portes correspondantes.
La figure 13 est une vue en coupe de cette assemblage, avec les portes en configuration verrouillée fermée.
La figure 14 est une vue de détail d'une protection de ligne critique se distinguant de celle des figures 12 et 13 par sa forme tronconique.

### Description détaillée

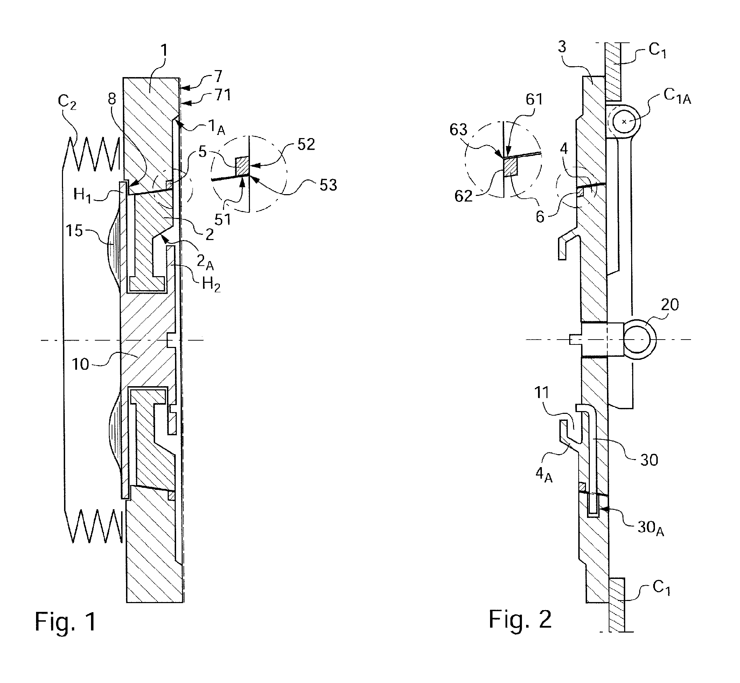

Les figures 1 et 2 représentent deux couples bride/porte adaptés à coopérer selon l'invention en sorte d'assurer une jonction temporaire étanche pour la mise en communication de deux enceintes munies chacune de l'un des couples bride/porte précités. De manière avantageuse (cela correspond à un cas de grande importance pratique), l'une des enceintes est une enceinte fixe rigide, dont une ouverture, bordée par une bride, est normalement obturée de manière étanche par une première porte, tandis que l'autre des enceintes est un conteneur amovible comportant aussi une ouverture bordée par une bride normalement obturée par une seconde porte. En d'autres termes, dans le cas considéré, il y a un couple bride/porte qui constitue un ensemble fixe, tandis que l'autre couple bride/porte forme un ensemble mobile. Les portes s'ouvrent alors vers l'intérieur de l'enceinte fixe.

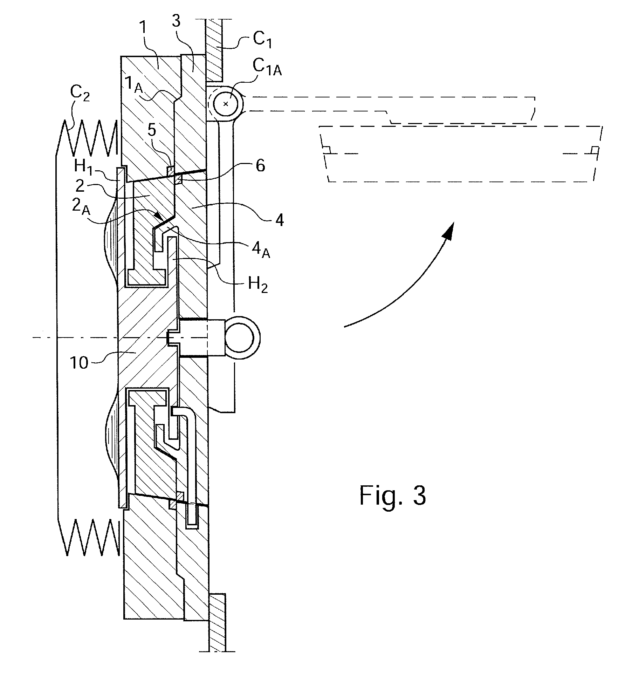

Plus précisément, la figure 1 représente l'ensemble bride/porte mobile, dit « ensemble mâle », tandis que la figure 2 représente l'ensemble bride/porte fixe dit «ensemble femelle». La figure 3 représente ces ensembles en configuration d'assemblage.

L'ensemble mobile comporte ainsi une bride mâle 1 et une porte mâle 2 obturant cette bride mâle, tandis que l'ensemble fixe comporte une bride femelle 3 et une porte femelle 4 obturant cette bride femelle.

Pour visualiser que la bride femelle 3 est fixe, elle est représentée comme étant reliée à une portion de paroi de chambre schématisée sous la référence C1, tandis que, pour visualiser que la bride mâle est mobile, elle est représentée comme étant reliée à une paroi flexible en soufflet, schématisée sous la référence C2, définissant une chambre déformable.

Plus précisément, l'ensemble femelle est adapté à être fixé à une paroi d'une enceinte fixe tandis que l'ensemble mâle est adapté à être fixé à un conteneur amovible à paroi souple.

Pour faciliter le dégagement de chaque porte à l'écart de sa bride, les bords complémentaires de cette porte et de cette bride sont évasés en direction de la zone vers laquelle la porte peut être dégagée. C'est ainsi que, puisque l'intérieur de l'enceinte fixe se trouve à droite de l'ensemble fixe de la figure 2, les bords des portes et des brides sont évasés en direction de la droite. Il est à préciser que, en fonction des besoins, l'angle réel peut être inférieur, égal ou supérieur à celui qui est représenté.

En outre, puisque la porte de l'ensemble mobile de la figure 1 doit pouvoir être dégagée vers la droite, au travers de la bride de l'ensemble fixe, cette porte mâle 2 doit être plus petite, même si ce n'est que légèrement, que la porte femelle 4.

Un joint d'étanchéité 5, en pratique en élastomère souple, ici fixé sur la bride mâle 1, assure, par sa surface tronconique 51, l'étanchéité entre cette bride et sa porte 2. De même, un joint 6, ici fixé à la porte femelle 4, assure, par sa surface tronconique 61, l'étanchéité entre la bride femelle 3 et sa porte 4. Lors de la solidarisation des deux ensembles mâle et femelle, l'étanchéité entre la bride mâle et la bride femelle est assurée par la face plane 52 du joint 5 tandis que l'étanchéité entre la porte mâle et la porte femelle est assurée par la face plane 62 du joint 6. Cela explique que le bloc constitué des portes constitue un bloc étanche.

On se rappellera que les intersections des surfaces 51 et 52 du joint 5 et des surfaces 61 et 62 du joint 6, constituent des « lignes critiques » 53 et 63 susceptibles d'être exposées à la contamination (les tolérances de fabrication des différents éléments ne permettent pas d'assurer un encapsulage étanche de ces zones géométriquement mal définies).

Le bloc étanche constitué des portes 2 et 4 lors de l'ouverture est, de manière connue, soit saisi manuellement et extrait de son logement (ce qui suppose de pouvoir agir par l'intérieur de l'enceinte fixe), soit dégagé par rotation autour d'une charnière C1A fixée à l'intérieur de l'enceinte sur la bride femelle 3 (voir la figure 3).

Ainsi que cela est développé ci-dessous, les ensembles bride+porte des figures 1 à 3 ont une conception qui permet de simplifier la structure des parties complémentaires par lesquelles coopèrent les brides et les portes, tout en garantissant un haut niveau d'assurance de la qualité, ainsi qu'une minimisation des interventions humaines en fonctionnement, tout en réduisant les risques de contamination lors d'une extraction ou d'une introduction de produits vers, ou depuis, l'enceinte fixe.

Selon une première caractéristique de l'invention, la porte mâle 2 adaptée (destinée) à être fixée à un conteneur amovible à paroi souple est traversée, en une portion centrale, par un arbre 10 sur lequel sont montées, du côté destiné à être opposé à la porte femelle (adaptée - destinée - à être portée par l'enceinte), une manivelle H1 (à au moins deux bras) destinée à verrouiller de manière étanche la porte mâle sur sa bride et, du côté destiné à être affronté à la porte femelle, une hélice H2 à au moins deux pales. L'arbre 10 est libre en rotation et indexé axialement dans son logement dans la porte 2. Il convient de préciser ici que, puisque les pales de l'hélice H2 n'ont pas vocation à assurer un déplacement dans l'air, leur géométrie peut être quelconque du moment qu'ils forment des saillies transversales à l'arbre (ces pales peuvent donc être de simples bras). Par contre, la manivelle est conçue en sorte d'être adaptée à être entraînée en rotation de manière manuelle, au travers du film constituant la partie souple du conteneur amovible, donc depuis l'extérieur de l'enceinte et du conteneur amovible ; cette action peut se faire sur les bras de cette manivelle. La section intérieure de la bride mâle 1 et la section extérieure de la porte mâle 2 ont des contours complémentaires qui présentent, par rapport à l'arbre 10 situé dans la portion centrale, des variations de distance telles que la manivelle a au moins une configuration angulaire de fermeture dans laquelle les extrémités de certains au moins de ses bras débordent de la porte et viennent en appui sur la bride en sorte de solidariser la porte mâle avec la bride mâle, et une configuration angulaire d'ouverture dans laquelle ces extrémités sont à l'écart de la bride et permettent un mouvement de la porte mâle au travers de la porte femelle.

On comprend que l'invention consistant, sur le conteneur amovible, à verrouiller la porte mâle sur sa bride au moyen de cette manivelle pouvant être entraînée en rotation depuis l'extérieur, en combinaison avec le fait que cet arbre traversant cette porte mâle porte, solidaire de cet arbre et donc de la manivelle, une hélice assurant l'attelage axial des deux portes rend possible, très simplement, toutes les fonctions de connexion et de mise en communication temporaire d'un conteneur amovible à paroi souple sur une enceinte fixe sous protection croisée et en toute sécurité fonctionnelle. De manière surprenante, la simplicité avec laquelle toutes ses fonctions sont possibles est telle que la conception de l'ensemble de la porte mâle et de sa bride et de l'ensemble tournant est suffisamment simple pour que cet ensemble n'ait qu'un coût modéré en point d'être compatible avec un usage unique du conteneur amovible à paroi souple ; en effet, la plupart des éléments avantageux permettant d'assurer les diverses fonctions peuvent être localisés sur la bride femelle ou sur la porte femelle, sans nuire à la simplicité de l'ensemble mâle du conteneur amovible à paroi souple. Pourtant l'homme de métier avait a priori tendance à localiser le maximum d'éléments mobiles sur l'ensemble porte+bride, réutilisable de nombreuses fois, porté par l'enceinte 30 fixe.

L'hélice H2 est avantageusement disposée dans une portion en creux 2A de la porte mâle. Ainsi que cela ressort de la figure 1, cette porte mâle est elle-même située dans une portion en creux 1A de la bride mâle, bordée par une collerette périphérique 7 ; cela permet, par fermeture temporaire de cette portion en creux de la porte mâle (voire de la portion en creux de la bride mâle) ici, par un film 71, plastique ou autre, collé ou soudé tout en restant détachable sur cette collerette, d'isoler la surface externe en creux de la porte mâle et de l'hélice, et de préférence celle de la bride mâle, et de les protéger de toute contamination jusqu'au moment de la connexion pour l'utilisation.

Des joints d'étanchéité (non représentés) sont disposés entre la porte 2 et l'arbre 10 de manière à maintenir l'étanchéité entre les deux côtés de cette porte mâle.

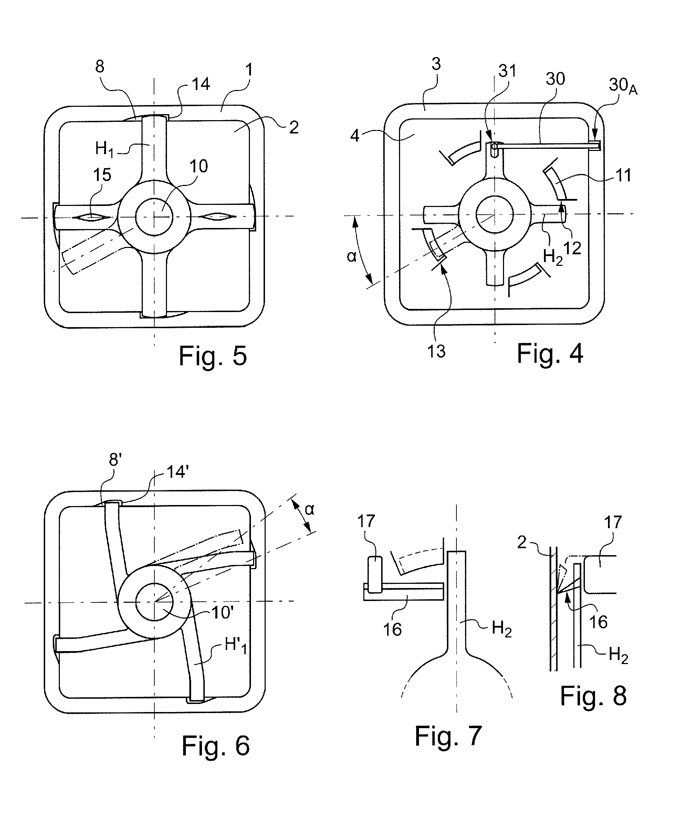

Selon une seconde caractéristique de l'invention, complémentaire de la première, la porte femelle 4 comporte (voir la figure 4 en complément de la figure 2), du côté destiné à être affronté à la porte mâle, des encoches 11 ménagées dans son épaisseur, adaptées à recevoir, par des ouvertures d'entrée latérales 12, les pales de l'hélice H2 lorsque les deux portes sont affrontées l'une à l'autre puis à permettre un débattement angulaire de ces pales à l'intérieur de ces encoches, autour de l'axe de l'arbre 10, jusqu'à au moins une configuration dans laquelle les pales assurent conjointement avec les encoches un attelage axial des deux portes. Dans cette configuration, le joint 6 assure l'étanchéité entre les deux portes, emprisonnant de manière étanche les deux surfaces non protégées.

En fait, on voit sur la figure 2 que la porte femelle 4 comporte, du côté destiné à être affronté à la porte mâle, un flasque tronconique 4A définissant une surépaisseur centrale de cette porte 4 ; cette surépaisseur est complémentaire du creux 2A ménagé dans la porte pour recevoir l'hélice H2 (voir ci-dessus) ; ce flasque tronconique peut être circonférentiellement discontinu, en étant formé par les parois délimitant les encoches 11. Bien entendu, en variante, la porte 2 peut présenter une épaisseur constante vis-à- vis de laquelle l'hélice vient en saillie, tandis que les encoches sont bel et bien dans l'épaisseur, constante, de la porte 4. On comprend toutefois que la structure représentée aux figures 1 et 2 a un avantage, comme décrit précédemment, du point de vue protection des surfaces externes et de l'hélice H2, avant une étape de solidarisation d'un conteneur mobile à usage unique à une porte femelle telle que la porte 4. On observe que l'une des pales a ici une forme en fourche 31, ce dont l'intérêt apparaît plus loin.

La coopération des brides et des portes est représentée à la figure 3, où on voit que les brides 1 et 3 sont affrontées l'une à l'autre, tandis que les portes 2 et 4 sont accolées, les pales de l'hélice H2 de la porte mâle étant engagés dans les encoches 11 de manière à assurer l'attelage des portes mâle et femelle (à la figure 4, les pales de l'hélice H2 sont circonférentiellement en regard des ouvertures 12 des encoches sans y être encore engagées ; cette figure 4 représente en outre, en tiretés, l'une des pales, après rotation d'un angle a, engagée à fond dans l'encoche correspondante, contre la butée 13 correspondante).

On comprend aisément que, pour réaliser correctement ces affrontements et solidarisations, l'ensemble mobile mâle doit être accolé à l'ensemble récepteur femelle dans une position parfaitement définie par des moyens de centrage et détrompage adéquats réalisés par des moyens extérieurs de solidarisation des brides entre elles. Ces moyens, connus en soi, ne sont pas représentés sur les figures 1 à 4. La forme rectangulaire ou carrée (voir ci-dessous) des ensembles facilite grandement ce positionnement.

Comme indiqué ci-dessus, pour faciliter l'écoulement ou le transfert 25 des pièces au travers du dispositif de jonction temporaire étanche à double portes, la section de passage, et donc le contour de la ligne des joints 5 et 6, des portes et des brides a une forme qui s'écarte d'un cercle centré sur l'axe de l'arbre 10, par exemple ovale ou polygonale (avec des coins arrondis, ou non).

Dans l'exemple ici représenté, le contour de la porte mâle a une forme rectangulaire, ici presque carrée.

Un intérêt d'une telle forme non-circulaire et présentant des portions rectilignes ressort des figures 5 et 6 qui représentent la surface interne de l'ensemble bride-porte mâle, c'est-à-dire la surface qui fait face à l'intérieur du conteneur souple mobile C1, selon deux exemples de configurations possibles.

La figure 5 représente la face interne de l'ensemble bride-porte de la figure 1 dans une configuration dans laquelle la porte et la bride mâle ne doivent pas être désolidarisées, typiquement lorsque cet ensemble n'est fixé à aucun ensemble femelle tel que celui de la figure 2. On observe que la bride 1 comporte une pluralité d'évidements 8 situés le long de son contour interne, en des zones au moins approximativement médianes des portions rectilignes de ce contour. Quant à la manivelle H1, elle a des bras qui ont une longueur inférieure à la distance à l'axe des coins du contour interne de cette bride, mais supérieure à la distance à l'axe de ces zones au moins approximativement médianes. Il en résulte que, lorsque les bras, qui sont avantageusement en un nombre égal au nombre de coins du contour interne de la bride mâle, donc ici au nombre de quatre puisque le contour est au moins approximativement carré, sont orientés vers les coins, ils ne gênent pas un éventuel mouvement de la porte mâle au travers de la bride mâle ; par contre, lorsque les bras sont orientés vers les zones médianes précitées, leurs extrémités débordent en dehors du contour interne de la bride, et pénètrent dans les évidements 8 respectifs et empêchent ensuite tout mouvement de la porte mâle hors de la bride mâle ; ces évidements assurent alors un verrouillage de la porte mâle dans la bride mâle. Dans cet exemple de la figure 5, les bras sont radiaux. Dans la variante de la figure 6, dont les éléments similaires à ceux de la figure 5 sont désignés par des signes de référence similaires mais affectés d'un indice « prime », les bras sont décalés latéralement par rapport à des positions radiales et les évidements 8' sont décalés en direction des coins du contour.

La présence des évidements 8 ou 8' a pour avantage de définir des butées 14 et 14' dont l'intérêt est mentionné ci-dessous.

On comprend toutefois que le blocage de la porte dans la bride dans une configuration angulaire des bras peut être obtenu sans avoir à prévoir de tels évidements, dès lors que les bras peuvent longer la surface interne de la bride (donc la surface située à l'intérieur du conteneur souple mobile).

On peut noter que les évidements 8 ou 8' ne constituent aucune gêne à l'écoulement des pièces en transfert.

De manière également préférée, l'ensemble bride-porte de la figure 2 comporte également au moins un élément de verrouillage adapté à maintenir la porte femelle 4 solidaire de la bride femelle 3 tant qu'une porte mâle n'est pas affrontée à cette porte femelle. La présente description divulgue en outre un élément de verrouillage qui est une tige montée coulissante dans un canal dont une partie est contenue dans la porte femelle et une partie extrême est contenue dans la bride femelle en ayant une configuration de verrouillage dans laquelle la tige s'étend dans les deux parties et une configuration de libération dans laquelle elle est entièrement contenue dans la porte femelle. Dans l'exemple de réalisation représenté à titre d'exemple, cet élément de verrouillage est schématisé sous la forme d'une tige de verrouillage 30 montée coulissante dans un canal transversal 30A situé dans l'épaisseur de l'ensemble bride-porte femelle, en partie dans la porte et en partie dans la bride en ayant une course telle que l'extrémité de la tige 30 puisse, à volonté, pénétrer dans la partie du canal située dans la bride, soit en sortir complètement. De manière encore plus préférée, cet élément de verrouillage est adapté à être entrainé en mouvement en synchronisme avec l'hélice H2. A cet effet, la tige 30 est avantageusement coudée en sorte de présenter une extrémité qui est parallèle à l'axe de l'hélice et adaptée à venir entre les dents d'une fourche portée par l'hélice. Plus précisément, dans l'exemple représenté à la figure 4, c'est l'un des pales qui est conformé en fourche, en variante non représentée, la fourche est distincte de l'extrémité de la pale qui la porte.

On comprend qu'ainsi la porte femelle de l'enceinte fixe est normalement verrouillée sur la bride femelle et ne se déverrouille qu'à condition qu'un ensemble bride-porte mâle d'un conteneur amovible à paroi spuple soit accouplé à l'ensemble bride-porte femelle de cette enceinte fixe et que l'hélice de cet ensemble mâle tourne jusqu'à, à la fois, assurer le verrouillage des portes entre elles, et agir sur la tige 30 en sorte de l'extraire de la partie de son canal qui est situé dans la bride femelle.

On obtient ainsi un séquençage des mouvements pour interdire l'ouverture de la porte femelle tant que la connexion n'est pas réalisée et l'hélice placée en configuration de verrouillage des portes entre elles (on peut choisir de ne pas autoriser l'ouverture de la porte femelle tant que l'hélice H2 n'est pas engagée à fond dans les encoches, ou seulement tant que l'hélice n'a pas tourné sur une fraction significative, par exemple 75%, de sa course possible en rotation). Inversement aussi, en début de la rotation en sens inverse l'hélice reverrouille automatiquement la porte femelle sur sa bride par la tige 30 avant de désolidariser les portes.

Il peut bien sûr y avoir plusieurs éléments de déverrouillage de la porte femelle par rapport à sa bride.

Il est à noter que, bien que l'ensemble de la tige 30 et de son canal 30A soit représenté sur la figure 2 pour des raisons de lisibilité, ceux-ci ne sont pas disposés suivant une direction passant l'axe de rotation de l'hélice.

En variante, l'entraînement de la tige 30 peut être assuré par une fourche indépendante des pales de l'hélice H2 ; ainsi cet entraînement peut être assuré par une fourche liée (à la manière d'un pêne transversal) à une clef 20, optionnelle, normalement portée en permanence par la porte femelle et adaptée à s'accoupler par son extrémité filetée, carrée, à tournevis, à baïonnette ou autre, avec l'hélice H2 (cette clef optionnelle peut aussi avoir d'autres fonctions, comme indiqué ci-dessous).

Un des avantages de prévoir que l'ensemble manivelle-hélice soit porté par la porte mâle du conteneur amovible à paroi souple est que la manivelle permet à un opérateur d'agir sur elle au travers du film souple constituant la paroi souple de ce conteneur amovible pour effectuer les rotations.

On comprend que l'ensemble de la manivelle et de l'hélice est dessiné et monté de telle sorte que :
- en position de départ, la manivelle H1 est bloquée dans la bride 1, la porte mâle et la bride mâle sont alors verrouillées, en position fermée et étanche.
- H2 est alors, lorsque les deux portes 2 et 4 sont accolées, en vis à vis des entrées des encoches 11 de la porte 4, sans assurer encore l'attelage entre les portes,
- lors de sa mise en rotation, H2 pénètre dans les encoches 11 de la porte femelle 4 et verrouille solidement les deux portes l'une sur l'autre.
- en parallèle, après un début de rotation de l'hélice H2 suffisant pour assurer un verrouillage des deux portes l'une à l'autre, H1 sort des évidements 8 de la bride 1 et déverrouille la porte 2 vis-à-vis de sa bride 1.
- enfin, si l'ensemble femelle en est pourvu, le loquet 30 de verrouillage de la porte 4 sur sa bride 3 est déplacé jusqu'au déverrouillage obtenu en fin de course de l'hélice H2.

Au retour, lors de la déconnexion, le cycle inverse est réalisé par la mise en rotation, dans le sens opposé de la manivelle H1 :
- enfonçant le loquet 30 jusqu'au verrouillage de la porte femelle 4 sur sa bride 3,
- re-verrouillant la porte 2 sur sa bride 1, par coopération des bras de H1 avec les évidements 8, puis déverrouillant les portes 2 et 4 entre elles (les pales sortent des encoches).

Il faut noter qu'après une partie de la rotation de la manivelle et de l'hélice, la porte 2 est déjà ou encore verrouillée sur sa bride 1 alors que les deux portes restent ou sont déjà solidarisées ; en d'autres termes, la porte 2 est verrouillée sur sa bride avant que les deux portes de puissent être désolidarisées.

Ainsi est assurée la notion dite de « sécurité positive » : pas de déconnexion d'un conteneur vis-à-vis de l'enceinte tant que la porte mâle (ou femelle) est ouverte, et tant que le bloc de portes n'est pas refermé et verrouillé.

La rotation de la manivelle et de l'hélice, pour effectuer les verrouillages/déverrouillages tels que décrits ci-dessus, est obtenue :
- soit par une action manuelle de l'opérateur, avec éventuellement, l'aide d'un outil, directement au travers du film du conteneur sur la manivelle H1 (à cet effet, celle-ci comporte avantageusement, des oreilles 15 ou toute autre forme de bossages en relief ou en creux, permettant aux doigts de l'opérateur ou de l'outil venant épouser ces formes, de l'actionner en fonction des manoeuvres à effectuer,
- soit par l'intermédiaire d'une clé 20 (voir ci-dessus, notamment à propos de la figure 1), venant s'indexer, lors de l'affrontement des brides, sur la manivelle H2. Cette clé, avantageusement intégrée dans la porte 4, peut être tournée manuellement depuis l'intérieur de la zone protégée, par un opérateur (lorsqu'il circule à l'intérieur de l'enceinte fixe, par ex.) ou être actionnée à distance par une tringlerie mécanique,
- soit encore, sans plus aucune intervention manuelle d'un opérateur, par l'intermédiaire d'une motorisation (moteur électrique, ensemble électro mécanique, électro magnétique, pneumatique etc.) agissant directement sur l'hélice lorsque celle-ci vient s'y indexer lors de l'accostage de l'ensemble mâle sur l'ensemble femelle. Dans ce dernier cas, l'activation peut être à commande électrique à distance, manuelle, ou générée par un dispositif d'automatisme électronique. Le moteur sera avantageusement noyé dans l'épaisseur de la porte femelle 4ᵢ à l'extérieur de la zone protégée ou dans un boitier étanche accolé à cette même porte à l'intérieur de la zone protégée.

Comme indiqué ci-dessus, les encoches 11 de la porte femelle 4, ainsi que les évidements 8 de la porte mâle, comportent avantageusement des butées 13 (encoches 11) ou 14 ou 14' (en ce qui concerne les évidements 8 ; on comprend que ces butées constituent une délimitation de la rotation de l'ensemble manivelle-hélice dans le sens du verrouillage des portes l'une à l'autre, ce qui permet un bon séquençage. On comprend que cet avantage est déjà obtenu dès lors que certaines des encoches et/ou des évidements comportent des butées ; s'agissant des butées sur la porte mâle, il convient de noter que celles-ci peuvent être constituées de saillies, en l'absence de tout évidement.

La figure 7 schématise une variante dans laquelle, en plus des butées de fond d'encoche 11, un arrêt escamotable 16 est prévu sur la porte mâle 2 (du côté tourné vers la porte femelle) qui bloque l'hélice H2 en sa position normale (correspondant au verrouillage par H2 de la porte 2 sur la bride mâle 1) ; l'ensemble hélice-manivelle est, en fait, coincé entre les butées 14 (ces butées des évidements agissent sur la manivelle) et cette butée escamotable 16 (qui empêche tout début de mouvement de l'hélice). Cet arrêt escamotable de sécurité 16 est ici escamoté, par écrasement (voir la figure 8), par un bossage 17 porté par la porte femelle, en regard de cet arrêt, en dehors de la zone balayée par les pales de l'hélice lors de sa rotation entre ses positions extrêmes, lors de la mise en place du conteneur mobile face à l'ensemble femelle monté sur la paroi de l'enceinte fixe.

La mise en rotation de l'hélice H2 n'est donc possible que lorsque le conteneur est correctement accolé.

Lors de la déconnexion, l'hélice H2 revient au point de départ. Au moment du décollement du conteneur, l'arrêt 16 est libéré et revient bloquer l'hélice H2 en position «porte 2 fermée et verrouillée sur sa bride 1 ». L'intégrité du conteneur est alors assurée avant et après utilisation.

On comprend en effet qu'il est tout particulièrement avantageux que des moyens soient prévus pour garantir que le fonctionnement du dispositif de jonction temporaire étanche à double porte est subordonné à un accostage préalable de l'ensemble mâle mobile sur l'ensemble femelle fixé sur la paroi de l'enceinte, stérile par exemple. Les figures 7 et 8 en représentent déjà un exemple.

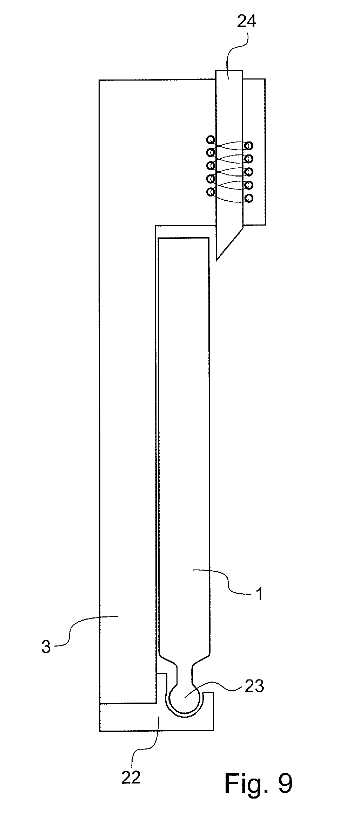

Une autre variante est représentée à la figure 9, sur laquelle on voit que les brides mâle 1 et femelle 3 comportent des moyens complémentaires de centrage, de positionnement précis, de détrompage, et de verrou les bloquant l'une sur l'autre. A cet effet, la bride femelle 3 comporte une série de saillies fixes 22 ou mobiles, disposées à sa périphérie en saillie axiale par rapport à sa surface adaptée à être affrontée à la bride mâle 1, de manière à agir comme détrompeurs et destinés à recevoir des contre-formes ou crochets 23 disposés sur la bride mâle, en sa périphérie en sorte de pouvoir être entouré par la pluralité de crochets 23. Cet accostage se fait par une mise en place de l'ensemble mâle du conteneur sur le réceptacle femelle de l'enceinte avec l'aide de mouvements de translation parallèle au plan d'affrontement des deux brides, combinés avec un pivotement autour d'axes parallèles ou perpendiculaires à ce plan d'affrontement.

Lorsque l'accostage est réalisé, un verrou 24 est ici prévu pour être actionné manuellement ou automatiquement pour bloquer solidement la liaison des deux brides.

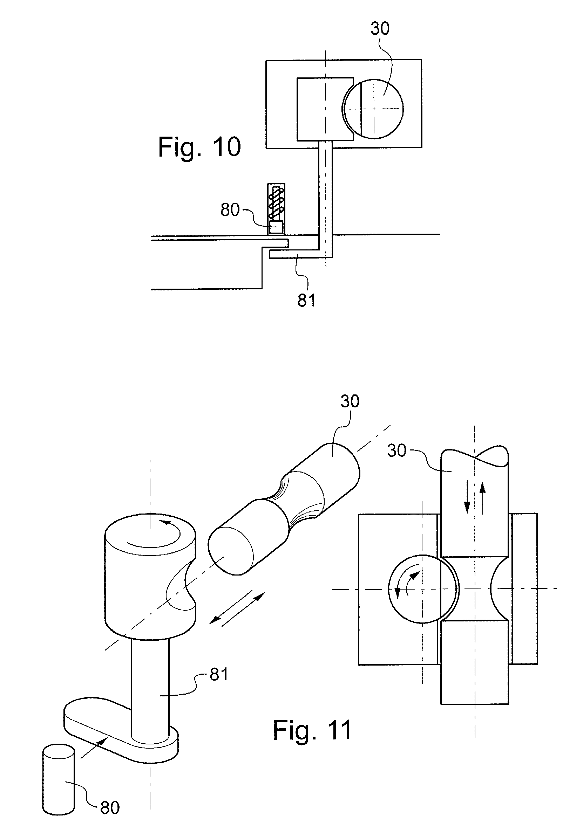

Encore une autre variante est représentée aux figures 10 et 11. On comprend facilement qu'un doigt élastiquement escamotable 80 venant normalement en saillie mais repoussé par l'affrontement des deux brides peut être prévu sur la bride femelle pour interdire tout mouvement de la tige 30 de verrouillage de l'ensemble femelle, tant que le conteneur n'est pas présent en position de connexion. Dans la configuration de la figure 10, le doigt 80 est maintenu escamoté du fait de la présence d'une portion de la bride mâle 1. A côté de cette portion de la bride mâle est située un bec d'un verrou 81 comportant une tige axiale portant une tête épaisse munie d'une fente transversale telle que, lorsque le verrou 81 est dans la configuration représentée, la fente est dans le prolongement du canal 30A des figures 2 ou 4, tandis que, lorsque le verrou est repoussé vers le bas par le doigt 80, en l'absence de bride mâle, la partie épaisse non fendue de la tête empêche tout mouvement de la tige de verrouillage 30. A cet effet, cette tige présente avantageusement une réduction de section telle que, lorsque la tige est engagée dans le canal dans sa configuration normale de verrouillage, la tête du verrou peut se déplacer verticalement entre une configuration haute (représentée) où la tige est libre de se déplacer et une configuration basse dans laquelle cette partie épaisse pénètre dans cette zone de section réduite, et la verrouille ainsi en position dans le canal 30A.

Ainsi, ce verrou 81 est mécaniquement relié au loquet 30 de verrouillage de la porte femelle 4 sur sa bride 3 pour, d'une part, interdire son ouverture tant que le verrou n'est pas en position verrouillée et, d'autre part, interdire que ce verrou ne soit remis en position déverrouillée tant que le loquet n'est pas revenu dans sa position porte fermée et verrouillée.

Cette fonction pérennise la sécurité « pas d'ouverture de la porte femelle sans conteneur connecté » et, inversement, « pas de déconnexion du conteneur tant que la porte femelle 4 n'est pas refermée et verrouillée ». Et ceci, indépendamment des sécurités déjà décrites précédemment.

Les diverses sécurités qui viennent d'être décrites peuvent, selon les besoins, être combinées ou non (cela dépend du degré de sécurité voulu).

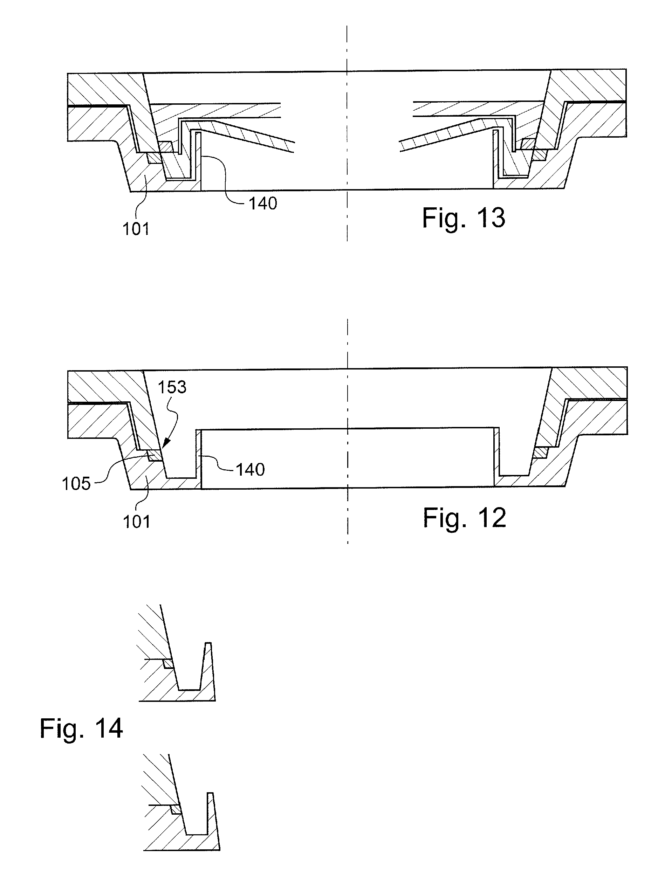

Selon encore une autre caractéristique avantageuse de l'invention, le dispositif à double porte est conçu de telle sorte que la ligne critique du joint 5 des brides qui constitue une incertitude concernant un risque potentiel -même si très limité- de contamination microbiologique par contact, au moment du passage, des pièces transférées, peut être efficacement protégée - voir les figures 12 et 13.

Dans la description de cette variante, les éléments similaires à ceux des figures précédentes sont désignés par des signes de référence similaires mais augmentés du nombre 100.

A cet effet, la bride mâle 101 (voir la figure 12) comporte, liée à sa base, une jupe cylindrique 140 bordant le contour interne de cette base de bride en remontant de manière au moins approximativement axiale à proximité voire au-delà de la ligne critique 153 du joint 105, empêchant ainsi tout contact des pièces ou outils passant par là, voire même des mains d'un opérateur, avec cette ligne critique (cela est clairement vrai lors de l'entrée de produit vers l'enceinte, c'est-à-dire vers la droite, mais se révèle également efficace pour des mouvements inverses). La présente description divulgue en outre une jupe avec une section cylindrique ou tronconique.

Plus précisément, les portions périphériques des portes mâle et femelle sont conformées pour s'engager entre les contours internes des brides mâle et femelle et cette paroi cylindrique (voir la figure 13).

Aux figures 12 et 13 la jupe cylindrique est d'épaisseur sensiblement constante. En variante (voir la figure 14) la paroi formant jupe est tronconique ; en fait de multiples conformations sont possibles, avec une conicité symétrique par rapport à une référence parallèle à l'axe, une conicité convergeant vers l'intérieur, ou au contraire une conicité divergente. Une telle conicité permet en pratique de favoriser l'écoulement des pièces au travers du passage.

On comprend que la porte mâle doit avoir un profil compatible avec cette forme complexe pour que les fonctions d'étanchéité décrites précédemment soient assurées. Il en est, bien évidemment, de même pour le profil de la porte femelle et sa bride.

La combinaison de cette fonction de protection de ligne critique avec celle de protection de la face avant de l'ensemble mâle par un film pelable est obtenue par le profil général de la figure 13. Elle est aussi garante d'une grande qualité et sécurité fonctionnelle du dispositif de jonction temporaire à double porte, objet de cette invention.

On appréciera, à propos des exemples préférés précités, que :
- l'invention s'applique à des brides et portes de n'importe quelles formes: ovales, polygonales, rectangulaires avec coins arrondis ou non.
- il peut y avoir un système de protection de la ligne critique empêchant tout contact des produits transférés avec le joint, potentiellement contaminé.
- la porte mâle dispose de moyens mobiles, rotatifs, de verrouillage et de déverrouillage constitués de bras de manivelle et de pales d'hélices venant se loger dans des encoches ou réceptacles prévus sur la bride mâle et sur la porte femelle.
- la manivelle et l'hélice, strictement solidaires, sont montées, indexées, de chaque côté de la porte mâle sur un arbre axialement fixe avec une liberté de mouvement en rotation de telle sorte que tout mouvement de l'une entraîne un mouvement strictement identique de l'autre,
- la bride mâle et la porte femelle comportent des réceptacles tels que les pales des hélices mis en mouvement dans un sens à partir de la configuration initiale (porte 2 verrouillée sur bride 1) opèrent successivement le verrouillage des deux portes (la porte 2 sur la porte 4) puis le déverrouillage de la porte mâle par rapport à sa bride (porte 2 vis-à-vis de sa bride 1).
- le séquencement est réversible (à partir de cette dernière position, le mouvement inverse des hélices opère le verrouillage de la porte 2 sur la bride 1 avant déverrouillage de la porte 2 de la porte 4),
- les encoches, évidements ou réceptacles prévus dans la porte femelle et/ou dans la bride femelle comportent des butées limitant la rotation des hélices au strict minima.
- la rotation des hélices (ou manivelles) s'effectue par action manuelle, au travers du film du conteneur sur l'hélice H1, éventuellement avec l'aide d'un outil venant épouser la forme de l'hélice. Cette rotation peut être aussi obtenue par l'action d'une clé montée traversant la porte femelle sur laquelle vient s'indexer le moyeu de l'hélice H2 lors de l'accostage de la porte du conteneur. L'activation de cette clé peut être manuelle depuis l'intérieur de la zone protégée, peut être commandée à distance par l'intermédiaire d'une tringlerie appropriée, soit, enfin, être motorisée (moteur électrique, moyen électromécanique, pneumatique ou électro magnétique, etc., avantageusement noyé dans l'épaisseur de la porte femelle ou dans un boitier étanche accolé à la porte femelle). Dans ce cas, l'activation est avantageusement télécommandée par liaison filaire ou sans fil,
- la porte femelle comporte une serrure de blocage sur la bride femelle en position fermée. Le loquet est ouvert ou débloqué par la fin de la rotation de l'hélice H2 après verrouillage de la porte mâle sur la porte femelle, puis refermé ou rebloqué par le début du mouvement de retour des hélices (sécurité dite « pas de déconnexion en cas de porte ouverte »),

Une pellicule souple 71, fig. 1 soudée sur la face avant 7 fig. 1 permet de confiner et de protéger cet espace de toute contamination pendant les opérations de transport, stockage, etc., jusqu'au moment de l'utilisation du conteneur, de préférence pour une utilisation unique,
- la porte mâle comporte une butée escamotable bloquant les bras de la manivelle H1 dans les réceptacles ou évidements de la bride 1. La présente description divulgue en outre une butée escamotable adaptée à être escamotée, par appui d'une porte située sur la porte femelle, en dehors du volume balayé par l'hélice lors de sa rotation entre sa configuration angulaire d'entrée dans les encoches et sa configuration angulaire dans laquelle elle attelle axialement les deux portes. Combinée avec le film de protection de la face avant de l'ensemble mâle mobile, elle assure l'évidence de l'intégrité et l'inviolabilité accidentelle du conteneur,
- cette butée escamotable, éclipsée lors de l'accostage de l'ensemble mobile mâle sur l'ensemble femelle par un butoir en protubérance sur la porte femelle, libère la rotation des manivelles-hélices lors de la connexion et la rebloque lors de la séparation des ensembles au moment de la déconnexion,
- Les brides mâle et femelle comportent des dispositifs d'accostage rapide et de verrouillage en position de connexion. Des moyens simples de sécurités en cascade autorisent ou interdisent les manipulations erronées conduisant à des situations de perte de confinement des enceintes et conteneurs.

Il peut en outre être noté que :
- Une fabrication de la porte femelle et de la bride mâle par bi- injection permet de mouler les joints directement sur leur support, supprimant ainsi les interstices sources de fuites, améliorant les conditions de stérilisation et renforçant l'étanchéité sur lignes droites,
- les brides 1 et 3 peuvent être munies de moyens électroniques, tels que des puces RFID (ou autres) pour une bonne traçabilité des transferts.

On comprend qu'il est tout particulièrement intéressant de combiner les sécurités optionnelles précitées en cascade, en sorte de maximaliser l'assurance de la qualité :
- Évidence d'intégrité du conteneur et protection de la surface extérieure avant de la porte mâle et de sa bride jusqu'à son utilisation : Par le film appliqué sur la face avant de l'ensemble mâle.
- Maintien de l'intégrité et de l'inviolabilité accidentelle du conteneur (La porte mâle ne peut être ouverte) jusqu'à l'accolage sur l'ensemble femelle : Par l'immobilisation de l'hélice entre la butée des évidements dans la bride mâle et la butée escamotable sur la porte mâle.
- Maintien de l'intégrité de la fermeture de la porte femelle (La porte femelle ne peut pas être ouverte) jusqu'à la connexion complète d'un ensemble conteneur mâle : par la rotation de l'hélice qui ne débloque le verrou d'ouverture qu'en fin de course, après avoir solidarisé les 2 portes entre elles et désolidarisé la porte mâle de sa bride mâle.
- Séquençage, dans le bon ordre par dessin, des verrouillages et déverrouillages des composants porte mâle/porte femelle, porte mâle sur bride mâle et déverrouillage porte femelle de sa bride femelle et inversement : Par la disposition relative des encoches dans la porte femelle et des évidements dans la bride mâle d'une part et de la manivelle et l'hélice d'autre part et, enfin du dispositif de verrouillage porte femelle sur bride femelle.
- Impossibilité de déverrouiller la porte femelle de sa bride femelle tant que le verrou solidarisant les brides entre elles lors de l'accolage du conteneur sur l'ensemble femelle n'est pas en position verrouillée : Par le blocage du loquet d'ouverture par le verrou des brides.
- Impossibilité de mouvoir le verrou des brides sans conteneur accolé : par le pion, effaçable par l'accolage d'un conteneur, bloquant le verrou en position ouvert.
- Impossibilité de déconnecter un conteneur tant que les portes ne sont pas refermées et verrouillées sur leur bride respective et que les portes ne sont pas désolidarisées entre elles : Par le loquet qui, seulement en position porte femelle verrouillée sur bride femelle, libère le verrou des brides et par l'hélice qui doit avoir échappé des encoches de la porte femelle.
- Impossibilité de séparer les portes l'une de l'autre lorsqu'elles sont ouvertes : Par la rotation de l'hélice qui reste bloquée tant que le loquet ne verrouille pas la porte femelle sur sa bride.

## Revendications

1. Dispositif de jonction temporaire étanche à double porte, pour la mise en communication temporaire d'une enceinte à environnement contrôlé (C2) avec un conteneur amovible à paroi souple et à environnement contrôlé (C1), comportant, d'une part, une bride femelle (3) normalement obturée par une porte femelle (4) en formant un ensemble destiné à obturer une ouverture d'une telle enceinte et, d'autre part, une bride mâle (1) normalement obturée par une porte mâle (2) en formant un ensemble destiné à obturer une ouverture d'un tel conteneur amovible à paroi souple, cette bride mâle étant adaptée à être accouplée de manière étanche à la bride femelle, et cette porte mâle étant adaptée à être accouplée de manière étanche à la porte femelle et à traverser la bride femelle, **caractérisé en ce que** :
* la porte mâle destinée à être fixée à un conteneur amovible à paroi souple est traversée en une portion centrale par un arbre (10) libre en rotation sur lequel sont montées, solidaires l'une de l'autre, du côté de la face destinée à être accolée à la porte femelle, une hélice (H2) à au moins deux pales et, du côté de la face opposée, une manivelle (H1) à au moins deux bras, conçue en sorte de pouvoir être entraînée en rotation par action au travers d'une paroi souple d'un tel conteneur amovible à paroi souple,
* la porte femelle comporte, sous sa face destinée à être accolée à la porte mâle, des encoches (11) ménagées dans l'épaisseur de cette porte femelle, adaptées à recevoir des pales de l'hélice (H2), lors d'une rotation de celle-ci solidarisant ainsi les 2 portes entre elles,
* la section intérieure de la bride mâle (1) et la section extérieure de la porte mâle (2) ont des contours complémentaires qui présentent, par rapport à l'arbre (10) situé dans la portion centrale, des variations de distance telles que la manivelle a au moins une configuration angulaire de fermeture dans laquelle les extrémités de certains au moins de ses bras débordent de la porte et viennent en appui sur la bride en sorte de solidariser la porte mâle avec la bride mâle, et une configuration angulaire d'ouverture dans laquelle ces extrémités sont à l'écart de la bride et permettent un mouvement de la porte mâle au travers de la bride femelle.

2. Dispositif selon la revendication 1, **caractérisé en ce que** les contours complémentaires de la porte mâle et de sa bride mâle et de la porte femelle et de sa bride femelle ont une forme sensiblement rectangulaire ou sensiblement carrée.

3. Dispositif selon la revendication 1 ou la revendication 2, **caractérisé en ce que** la bride mâle comporte, sous sa face opposée à celle devant affronter la bride femelle, des évidements (8) destinés à recevoir les extrémités des bras de la manivelle dans ladite configuration angulaire de fermeture, et définissant des butées (14, 14') adaptées à délimiter le débattement angulaire des bras en configuration de fermeture de la manivelle.

4. Dispositif selon l'une quelconque des revendications 1 à 3, **caractérisé en ce que** la porte mâle (2) comporte, sur sa face destinée à être affrontée à la porte femelle, une butée escamotable (16) adaptée à empêcher la rotation de l'hélice à partir d'une configuration dans laquelle la manivelle est dans sa configuration angulaire de verrouillage dans un sens permettant un déverrouillage de cette manivelle, cette butée étant adaptée à être escamotée par la venue de la porte femelle en affrontement avec la porte mâle, par appui d'une portée (17) située sur cette porte femelle en dehors du volume balayé par l'hélice lors de sa rotation entre sa configuration angulaire d'entrée dans les encoches et sa configuration angulaire dans laquelle elle attelle axialement les deux portes.

5. Dispositif selon l'une quelconque des revendications 1 à 4, **caractérisé en ce que** l'hélice et la manivelle sont montées sur l'arbre central de telle manière que la manivelle est dans sa configuration angulaire de fermeture de verrouillage de la porte mâle sur sa bride lorsque, lors de l'affrontement des ensembles mâle et femelle, les pales de l'hélice sont en regard des ouvertures (12) d'entrée dans les encoches (11) de la porte femelle.

6. Dispositif selon l'une quelconque des revendications des revendications 1 à 5, **caractérisé en ce que** les encoches (11) comportent, en leur fond, des butées (13) délimitant pour l'hélice une configuration angulaire d'attelage.

7. Dispositif selon l'une quelconque des revendications 1 à 6, **caractérisé en ce que** la porte femelle comporte au moins un élément (30) de verrouillage de cette porte femelle à la bride femelle, dont le dégagement ou le rengagement vis-à-vis de cette bride femelle est commandé par la rotation de l'hélice dans les encoches de cette porte femelle.

8. Dispositif selon la revendication 7, **caractérisé en ce qu'**un élément de couplage (31) avec l'hélice est prévu pour déplacer l'élément de verrouillage en fonction de la rotation de l'hélice dans les encoches, l'élément de verrouillage étant en une configuration de verrouillage de la porte femelle avec la bride femelle tant que les pales de l'hélice sont en dehors des encoches, et étant en une configuration de libération lorsque les pales sont en fin de course dans les encoches.

9. Dispositif selon la revendication 7 ou la revendication 8, **caractérisé en ce que** la bride femelle comporte un verrou (81) adapté à bloquer l'élément de verrouillage en configuration de verrouillage et à ne permettre à celui-ci de venir en configuration de dégagement sous l'action de l'hélice que lorsqu'un ensemble mâle est affronté et verrouillée par ce verrou 81 à cet ensemble femelle.

10. Dispositif selon l'une quelconque des revendications 1 à 9, **caractérisé en ce que** la porte femelle est traversée par une clé (20) adaptée à être solidarisée temporairement à l'arbre de la porte mâle en sorte de pouvoir aussi commander des mouvements de rotation de cet arbre et donc de l'hélice et de la manivelle, à partir depuis l'espace situé en regard de la porte femelle à l'opposé de la porte mâle.

11. Dispositif selon l'une quelconque des revendications 1 à 10, **caractérisé en ce que** la porte mâle comporte un creux (2A) dans lequel est située l'hélice, un film de protection (71) étant fixé, de manière détachable, sur une portion périphérique de l'ensemble formé de la bride mâle et de la porte mâle.

12. Dispositif selon l'une quelconque des revendications 1 à 11, **caractérisé en ce que** la bride mâle comporte, le long de son bord interne situé à l'opposé de la bride femelle, une jupe s'étendant jusqu'au travers de la bride femelle protégeant ainsi la ligne critique de tout contact avec les produits ou outils transférés ou encore les mains d'un opérateur.

13. Dispositif selon l'une quelconque des revendications 1 à 12, **caractérisé en ce que** les brides comportent des éléments complémentaires de positionnement et d'attelage temporaire (22, 23, 24).

14. Ensemble comportant une enceinte dont une ouverture est obturée par une bride femelle et une porte femelle et au moins un conteneur amovible à paroi souple comportant une ouverture obturée par une bride mâle et une porte mâle, ces brides et ces portes formant un dispositif de jonction temporaire étanche conforme à l'une quelconque des revendications 1 à 13.

15. Conteneur amovible à paroi souple comportant une bride mâle et une porte mâle destinés à faire partie d'un dispositif de jonction temporaire étanche conforme à l'une quelconque des revendications 1 à 13.

## Patentansprüche

1. Temporär abgedichtete Doppeltür-Verbindungsvorrichtung zum temporären Verbinden eines Gehäuses mit kontrollierter Umgebung (C2) mit einem abnehmbaren Behälter mit nachgiebiger Seitenwand und mit kontrollierter Umgebung (C1), welche einerseits einen Flansch mit Rücksprung (3) umfasst, der normalerweise durch eine Tür mit Rücksprung (4) verschlossen ist, wodurch eine Einheit gebildet wird, die dazu bestimmt ist, eine Öffnung eines derartigen Gehäuses zu verschließen, und andererseits einen Flansch mit Vorsprung (1) umfasst, der normalerweise durch eine Tür mit Vorsprung (2) verschlossen ist, wodurch eine Einheit gebildet wird, die dazu bestimmt ist, eine Öffnung eines derartigen Behälters mit nachgiebiger Seitenwand zu verschließen, wobei der Flansch mit Vorsprung geeignet ist, abdichtend an den Flansch mit Rücksprung angekuppelt zu werden, und die Tür mit Vorsprung geeignet ist, abdichtend an die Tür mit Rücksprung angekuppelt zu werden und den Flansch mit Rücksprung zu durchdringen, **dadurch gekennzeichnet, dass**
* die Tür mit Vorsprung, die dazu bestimmt ist, an einem abnehmbaren Behälter mit nachgiebiger Seitenwand befestigt zu werden, in einem zentralen Abschnitt von einer frei drehbaren Achse (10) durchdrungen wird, auf der, miteinander verbunden, auf der Seite, die dazu bestimmt ist, mit der Tür mit Rücksprung verbunden zu werden, ein Propeller (H2) mit wenigstens zwei Flügeln und auf der entgegen gesetzten Seite eine Kurbel (H1) mit wenigstens zwei Armen montiert sind, derart, dass sie durch Einwirkung durch eine nachgiebige Seitenwand eines solchen abnehmbaren Behälters mit nachgiebiger Seitenwand hindurch in Rotation gebracht werden können,
* die Tür mit Rücksprung auf der Seite, die dazu bestimmt ist, mit der Tür mit Vorsprung verbunden zu werden, Einkerbungen (11) aufweist, die in der Dicke der Tür mit Rücksprung ausgespart sind und geeignet sind, die Flügel des Propellers (H2) bei einer Drehung desselben aufzunehmen, wodurch die beiden Türen untereinander fest verbunden werden,
* der innere Abschnitt des Flansches mit Vorsprung (1) und der äußere Abschnitt der Tür mit Vorsprung (2) komplementäre Konturen aufweisen, welche, in Bezug auf die Achse (10), die sich in dem zentralen Abschnitt befindet, Abstandsvariationen aufweisen, derart, dass die Kurbel wenigstens eine Winkelkonfiguration der Schließung aufweist, in der die Enden zumindest einiger ihrer Arme über die Tür hinausragen und auf dem Flansch derart gehalten werden, dass die Tür mit Vorsprung mit der Tür mit Rücksprung verbunden wird, und eine Winkelkonfiguration der Öffnung aufweist, in der diese Enden einen Abstand zu dem Flansch aufweisen und eine Bewegung der Tür mit Vorsprung durch den Flansch mit Rücksprung hindurch ermöglichen.

2. Vorrichtung gemäß Anspruch 1, **dadurch gekennzeichnet, dass** die komplementären Konturen der Tür mit Vorsprung und deren Flansch mit Vorsprung und der Tür mit Rücksprung und deren Flansch mit Rücksprung eine im Wesentlichen rechteckige Form oder im Wesentlichen quadratische Form aufweisen.

3. Vorrichtung gemäß Anspruch 1 oder Anspruch 2, **dadurch gekennzeichnet, dass** der Flansch mit Vorsprung auf seiner Seite, die der Seite gegenüber liegt, die mit dem Flansch mit Rücksprung aufeinander treffen soll, Aussparungen (8) aufweist, die dazu bestimmt sind, die Enden der Arme der Kurbel in der besagten Winkelkonfiguration der Schließung aufzunehmen und Anschläge (14, 14') definieren, die geeignet sind, den Winkelausschlag der Arme in der Verschlusskonfiguration der Kurbel zu begrenzen.

4. Vorrichtung gemäß irgendeinem der Ansprüche 1 bis 3, **dadurch gekennzeichnet, dass** die Tür mit Vorsprung (2) auf ihrer Seite, die dazu bestimmt ist, auf die Tür mit Rücksprung zu treffen, einen versenkbaren Anschlag (16) umfasst, der geeignet ist, die Rotation des Propellers ausgehend von einer Konfiguration, in der sich die Kurbel in ihrer Winkelkonfiguration der Schließung befindet, derart, dass eine Freigabe dieser Kurbel ermöglicht wird, zu verhindern, wobei dieser Anschlag geeignet ist, durch das Eintreffen der Tür mit Rücksprung und Zusammentreffen mit der Tür mit Vorsprung durch Auflage eines Bereichs (17), der sich auf dieser Tür mit Rücksprung außerhalb des Raums befindet, der durch den Propeller bei seiner Rotation zwischen seiner Winkelkonfiguration des Eintritts in die Einkerbungen und seiner Winkelkonfiguration, in der er axial die beiden Türen ankuppelt, eingenommen wird, zu verschwinden.

5. Vorrichtung gemäß irgendeinem der Ansprüche 1 bis 4, **dadurch gekennzeichnet, dass** der Propeller und die Kurbel an der zentralen Achse derart befestigt sind, dass die Kurbel sich in ihrer Winkelkonfiguration der Verriegelungsschließung der Tür mit Vorsprung auf ihrem Flansch befindet, wenn sich, bei dem Zusammentreffen der Einheiten mit Vorsprung und der Einheiten mit Rücksprung, die Flügel des Propellers gegenüber den Eintrittsöffnungen (12) in den Einkerbungen (11) der Tür mit Rücksprung befinden.

6. Vorrichtung gemäß irgendeinem der Ansprüche 1 bis 5, **dadurch gekennzeichnet, dass** die Einkerbungen (11) an ihrem Boden Anschläge (13) aufweisen, welche für den Propeller eine Winkelkonfiguration der Kupplung begrenzen.

7. Vorrichtung gemäß irgendeinem der Ansprüche 1 bis 6, **dadurch gekennzeichnet, dass** die Tür mit Rücksprung wenigstens ein Element (30) zur Verriegelung dieser Tür mit Rücksprung mit dem Flansch mit Rücksprung aufweist, wobei die Freigabe von dem und das Eingreifen in den Flansch mit Rücksprung durch die Rotation des Propellers in den Einkerbungen der Tür mit Rücksprung gesteuert wird.

8. Vorrichtung gemäß Anspruch 7, **dadurch gekennzeichnet, dass** ein Kupplungselement (31) der Kupplung mit dem Propeller vorgesehen ist, um das Verriegelungselement in Abhängigkeit von der Rotation des Propellers in den Einkerbungen zu verschieben, wobei sich das Verriegelungselement in einer Konfiguration der Verriegelung der Tür mit Rücksprung mit dem Flansch mit Rücksprung befindet, solange sich die Flügel des Propellers außerhalb der Einkerbungen befinden, und in einer Freigabekonfiguration befindet, wenn die Flügel sich am Ende des Laufs in den Einkerbungen befinden.

9. Vorrichtung gemäß Anspruch 7 oder Anspruch 8, **dadurch gekennzeichnet, dass** der Flansch mit Rücksprung einen Riegel (81) aufweist, der geeignet ist, das Verriegelungselement in der Verriegelungskonfiguration zu blockieren und dieses daran zu hindern, unter Einwirkung des Propellers die Freigabekonfiguration einzunehmen, wenn eine Einheit mit Vorsprung mit dem Riegel (81) an dieser Einheit mit Rücksprung zusammentrifft und durch diesen verriegelt wird.

10. Vorrichtung gemäß irgendeinem der Ansprüche 1 bis 9, **dadurch gekennzeichnet, dass** die Tür mit Rücksprung von einem Schlüssel (20) durchdrungen wird, der geeignet ist, temporär mit der Achse der Tür mit Vorsprung verbunden zu werden, derart, dass auch die Rotationsbewegungen dieser Achse und somit des Propellers und der Kurbel, ausgehend von dem Raum, der im Hinblick auf die Tür mit Rücksprung gegenüber von der Tür mit Vorsprung liegt, gesteuert werden kann.

11. Vorrichtung gemäß irgendeinem der Ansprüche 1 bis 10, **dadurch gekennzeichnet, dass** die Tür mit Vorsprung eine Vertiefung (2A) aufweist, in der sich der Propeller befindet, wobei ein Schutzfilm (71) ablösbar auf einem peripheren Abschnitt der Einheit, die aus dem Flansch mit Vorsprung und der Tür mit Vorsprung gebildet wird, fixiert ist.

12. Vorrichtung gemäß irgendeinem der Ansprüche 1 bis 11, **dadurch gekennzeichnet, dass** der Flansch mit Vorsprung entlang seiner inneren Kante, die dem Flansch mit Rücksprung gegenüber liegt, eine Schürze aufweist, die sich durch den Flansch mit Rücksprung hindurch erstreckt und so die kritische Linie vor jeglichem Kontakt mit überführten Produkten oder Geräten oder auch den Händen einer Bedienungsperson schützt.

13. Vorrichtung gemäß irgendeinem der Ansprüche 1 bis 12, **dadurch gekennzeichnet, dass** die Flansche komplementäre Elemente zur Positionierung und temporären Kupplung (22, 23, 24) umfassen.

14. Einheit, umfassend ein Gehäuse, dessen eine Öffnung durch einen Flansch mit Rücksprung und eine Tür mit Rücksprung verschlossen wird, und wenigstens einen abnehmbaren Behälter mit nachgiebiger Seitenwand, welcher eine Öffnung aufweist, die durch einen Flansch mit Vorsprung und eine Tür mit Vorsprung verschlossen wird, wobei diese Flansche und diese Türen eine temporär abgedichtete Verbindungsvorrichtung gemäß irgendeinem der Ansprüche 1 bis 13 bilden.

15. Abnehmbarer Behälter mit nachgiebiger Seitenwand, welcher einen Flansch mit Vorsprung und eine Tür mit Vorsprung umfasst, die dazu bestimmt sind, Teil einer temporär abgedichteten Verbindungsvorrichtung gemäß irgendeinem der Ansprüche 1 bis 13 zu bilden.

## Claims

1. Temporary sealed double-door junction device, for temporarily connecting a controlled-environment enclosure (C2) to a controlled-environment flexible-walled removable container (C1), comprising, on the one hand, a female flange (3) normally blocked off by a female door (4), forming an assembly intended to block off an opening of such an enclosure and, on the other hand, a male flange (1) normally blocked off by a male door (2), forming an assembly intended to block off an opening of such a flexible-walled removable container, the male flange being capable of being coupled in a sealed manner to the female flange, and the male door being capable of being coupled in a sealed manner to the female door and of passing through the female flange, **characterized in that**:
* the male door intended to be fixed to a flexible-walled removable container is passed through in a central portion by a freely-rotating shaft (10) on which are mounted, firmly fixed to each other, on the side of the face intended to be docked to the female door, an impeller (H2) having at least two blades and, on the side of the opposite face, a crank (H1) having at least two arms, designed so as to be capable of being driven in rotation by action through a flexible wall of such a flexible-walled removable container,
* the female door comprises, below its face intended to be docked against the male door, notches (11) arranged in the thickness of said female door, capable of receiving blades of the impeller (H2), during a rotation of the latter, thus securing the two doors together,
* the inner section of the male flange (1) and the outer section of the male door (2) have complementary outlines that have, relative to the shaft (10) situated in the central portion, distance variations such that the crank has at least one angular closed configuration in which the ends of at least some of its arms extend beyond the door and rest on the flange so as to secure the male door to the male flange, and an angular open configuration in which said ends are away from the flange and allow the movement of the male door through the female flange.

2. Device according to claim 1, **characterized in that** the complementary outlines of the male door and its male flange and of the female door and its female flange have a substantially rectangular or substantially square shape.

3. Device according to claim 1 or claim 2, **characterized in that** the male flange comprises, below its face opposite to the one that must abut against the female flange, recesses (8) intended to receive the ends of the arms of the crank in said angular closed configuration, and defining stops (14, 14') capable of delimiting the angular displacement of the arms in the closed configuration of the crank.

4. Device according to any one of claims 1 to 3, **characterized in that** the male door (2) comprises, on its face intended to abut against the female door, a retractable stop (16) capable of preventing the rotation of the impeller from a configuration in which the crank is in its angular locking configuration in a direction allowing for the unlocking of said crank, said stop being capable of being retracted by the arrival of the female door in abutment with the male door, by pressure of a face (17) situated on said female door beyond the volume swept by the impeller during its rotation between its angular entry configuration into the notches and its angular configuration in which it axially couples the two doors.

5. Device according to any one of claims 1 to 4, **characterized in that** the impeller and the crank are mounted on the central shaft such that the crank is in its angular closed configuration of locking the male door on its flange when, during the abutment of the male and female assemblies, the blades of the impeller are facing the lead-in openings (12) into the notches (11) of the female door.

6. Device according to any one of claims 1 to 5, **characterized in that** the notches (11) comprise, at their base, stops (13) delimiting for the impeller an angular coupling configuration.

7. Device according to any one of claims 1 to 6, **characterized in that** the female door comprises at least one element (30) for locking said female door to the female flange, the release or re-engagement of which vis-à-vis said female flange is controlled by the rotation of the impeller in the notches of said female door.

8. Device according to claim 7, **characterized in that** a coupling element (31) with the impeller is provided to move the locking element according to the rotation of the impeller in the notches, the locking element being in a locking configuration of the female door with the female flange while the blades of the impeller are outside the notches, and being in a release configuration when the blades are at the end of their travel in the notches.

9. Device according to claim 7 or claim 8, **characterized in that** the female flange comprises a bolt (81) capable of immobilizing the locking element in the locking configuration and preventing the latter adopting the release configuration under the action of the impeller unless a male assembly is in abutment with and locked by said bolt (81) to said female assembly.

10. Device according to any one of claims 1 to 9, **characterized in that** the female door is passed through by a key (20) capable of being temporarily secured to the shaft of the male door so that it can also control rotational movements of said shaft and therefore of the impeller and the crank, from the space situated facing the female door, opposite the male door.

11. Device according to any one of claims 1 to 10, **characterized in that** the male door comprises a hollow (2A) in which the impeller is situated, a protective film (71) being detachably fixed onto a peripheral portion of the assembly formed by the male flange and the male door.

12. Device according to any one of claims 1 to 11, **characterized in that** the male flange comprises, along its inner edge situated opposite the female flange, a skirt extending just through the female flange, thus protecting the critical line from any contact with the products or tools transferred or also the hands of an operator.

13. Device according to any one of claims 1 to 12, **characterized in that** the flanges comprise complementary positioning and temporary coupling elements (22, 23, 24).

14. Assembly comprising an enclosure, an opening of which is blocked off by a female flange and a female door and at least one flexible-walled removable container comprising an opening blocked off by a male flange and a male door, said flanges and said doors forming a temporary sealed junction device according to any one of claims 1 to 13.

15. Flexible-walled removable container comprising a male flange and a male door intended to form part of a sealed temporary junction device according to any one of claims 1 to 13.
